# EUROPEAN PATENT APPLICATION

(11) **EP 3 424 999 A1**
(43) Date of publication of application: **09.01.2019**
(21) Application number: 17759981.8
(22) Date of filing: 28.02.2017
(51) Int. Cl.: C08L 21/00, C08K 3/04, C08K 3/32, C08L 23/16

(54) **REFRACTORY ELASTOMER COMPOSITION AND MOLDED ARTICLE THEREOF**

(30) Priority: 29.02.2016 JP 2016037251; 30.09.2016 JP 2016192538
(71) Applicant: Sekisui Chemical Co., Ltd., Osaka-shi, Osaka 530-8565 (JP)
(72) Inventor: SAWA, Kazuhiro, Mishima-gun Osaka 618-0021 (JP); YANO, Hideaki, Hasuda-shi Saitama 349-0198 (JP); SHIMAMOTO, Michio, Hasuda-shi Saitama 349-0198 (JP)
(74) Representative: Ter Meer Steinmeister & Partner
(86) International application number: PCT/JP2017/007736
(87) International publication number: WO 2017/150515

(57) **Abstract**

The fireproof elastomer composition comprises an elastomer, a thermally expandable graphite, a salt of phosphorus oxoacid, and a reinforcing inorganic filler. The quotient produced by the division of the total amount of the reinforcing inorganic filler and the thermally expandable graphite by the amount of the salt of phosphorus oxoacid is 0.7 to 10. The composition has the tensile strength at 23°C of 1.0 N/mm² or more, and the expansion rate after combustion of 15 times or more.

## Description

### Technical Field

The present invention relates to a fireproof elastomer composition and a molded article thereof.

### Background Art

Expandable graphite that expands due to heat has been used for a resin composition with fireproof performance so as to prevent fire from spreading. Further, materials that are converted into an inorganic polymer under a high temperature have been used in many cases to prevent the ash content generated by combustion from collapsing.

For example, Patent Document 1 discloses an unvulcanized rubber composition containing 10 to 100 parts by weight of a thermally expandable graphite, 50 to 170 parts by weight of aluminum phosphite, and 50 to 170 parts by weight of an inorganic filler, based on 100 parts by weight of the basic rubber component.

However, in this technology, the fireproof performance, such as the expansion rate, was insufficient. Moreover, to ensure superior high fireproof performance, it was necessary to increase the contents of the thermally expandable graphite and the aluminum phosphite, thereby causing a problem of significant decrease in tensile strength, which is the inherent characteristic of rubber.

### Citation List

### Patent Documents

Patent Document 1: JP2008-115359A

### Summary of Invention

### Technical Problem

It is thus necessary to increase the incorporated amount of at least one of the thermally expandable graphite and the aluminum phosphite, so as to increase the expansion rate; however, it is difficult to ensure both such a high content and desired tensile strength. The present invention was made to solve this problem.

An object of the present invention is to provide a fireproof elastomer composition having a high expansion rate while maintaining a high tensile strength, and to provide a molded article of the composition.

### Solution to Problem

The inventors of the present invention found that the tensile strength may be increased by adding a reinforcing inorganic filler even when a large amount of thermally expandable graphite is added. In particular, the inventors found that both the tensile strength and the expansion rate may be satisfied by specifying the quotient produced by the division of the total amount of the reinforcing inorganic filler and the thermally expandable graphite by the amount of a salt of phosphorus oxoacid (the total amount of a reinforcing inorganic filler and a thermally expandable graphite / the amount of a salt of phosphorus oxoacid) to 0.7 to 10.

One embodiment of the present invention provides a fireproof elastomer composition comprising an elastomer, a thermally expandable graphite, a salt of phosphorus oxoacid, and a reinforcing inorganic filler, wherein the quotient produced by the division of the total amount of the reinforcing inorganic filler and the thermally expandable graphite by the amount of the salt of phosphorus oxoacid is 0.7 to 10, the composition has the tensile strength at 23°C of 1 N/mm² or more, and the expansion rate after the combustion of 15 times or more.

Another embodiment of the present invention provides a molded article having a mold portion comprising the fireproof elastomer composition.

### Advantageous Effects of Invention

The fireproof elastomer composition of the present invention ensures a high expansion rate while maintaining a high tensile strength.

### Brief Description of Drawings

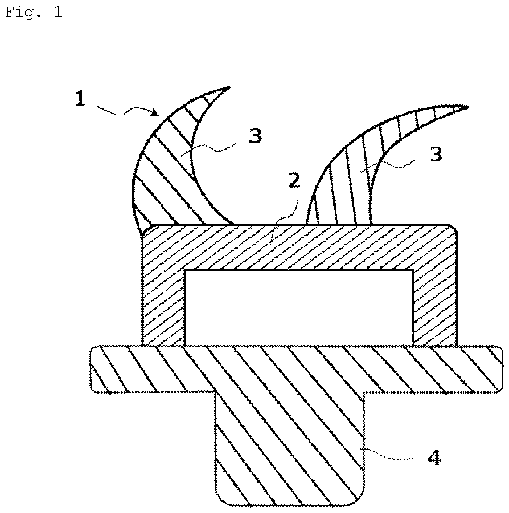

Fig. 1 shows a schematic cross-sectional view of a construction gasket.

### Description of Embodiments

An example embodiment of the present invention is described below.

A fireproof elastomer composition of the present invention comprises an elastomer, a thermally expandable graphite, a salt of phosphorus oxoacid, and a reinforcing inorganic filler. In the composition, the quotient produced by the division of the total amount of the reinforcing inorganic filler and the thermally expandable graphite by the amount of the salt of phosphorus oxoacid is 0.7 to 10, the tensile strength at 23°C is 1.0 N/mm² or more, and the expansion rate after the combustion is 15 times or more.

Suitable examples of elastomer include rubber and thermoplastic elastomers. Examples of rubber include natural rubbers and synthetic rubbers.

Examples of synthetic rubbers include, but are not limited to, isoprene rubber, butadiene rubber, 1,2-polybutadiene rubber, styrene-butadiene rubber, chloroprene rubber, nitrile rubber, butyl rubber, chlorinated butyl rubber, ethylene-propylene rubber, ethylene-propylene-diene rubber (EPDM), chlorosulfonylated polyethylene, acrylic rubber, epichlorohydrin rubber, silicone rubber, fluorine rubber, and urethane rubber. Among these, EPDM is preferable in terms of weather resistance, aging resistance, ozone resistance, and the like. Examples of thermoplastic elastomers include styrene-based elastomers, olefin-based elastomers (TPO), vinyl chloride-based elastomers, urethane-based elastomers, and amide-based elastomers. Among these, olefin-based elastomers are preferable in terms of aging resistance, weather resistance, costs, and the like.

One kind of elastomer, or two or more kinds of elastomers may be used.

Thermally expandable graphite is a previously known, thermally expandable material and is made by forming a graphite intercalation compound by treating powder of natural scaly graphite, pyrolytic graphite, kish graphite, or the like, with an inorganic acid such as concentrated sulfuric acid, nitric acid, selenic acid, or the like, and a strong oxidizing agent such as concentrated nitric acid, perchloric acid, a perchlorate, a permanganate, a dichromate, hydrogen peroxide, or the like. The thermally expandable graphite is a kind of crystalline compound that retains a layered structure of the carbon.

The thermally expandable graphite obtained by being subjecting to an acid treatment as mentioned above may further be neutralized with ammonia, an aliphatic lower amine, an alkali metal compound, an alkaline earth metal compound, or the like. The grain size of the thermally expandable graphite is preferably in a range of 20 to 200 mesh. If the grain size is 200 mesh or smaller, the expansion rate of the graphite is sufficient to obtain an expandable heat insulating layer. If the grain size is 20 mesh or greater, the general performance of the elastomer will not easily deteriorate. Examples of commercially available products of the thermally expandable graphite include GREP-EG (Tosoh Corporation) and GRAFGUARD (GrafTech).

The amount of the thermally expandable graphite in the fireproof elastomer composition is not particularly limited. The amount of the thermally expandable graphite is preferably 3 to 300 parts by mass, more preferably 50 to 200 parts by mass, and further preferably 60 to 150 parts by mass, per 100 parts by mass of the elastomer. When the content of the thermally expandable graphite in the fireproof elastomer composition is 3 parts by mass or more, the fireproof elastomer composition undergoes expansion, thereby ensuring a fireproof performance. When the content of the thermally expandable graphite is 300 parts by mass or less, the mechanical properties are maintained.

The salt of phosphorus oxoacid is added to prevent the residue of the fireproof elastomer composition generated after the combustion from collapsing, more specifically, to maintain the shape of the residue. Examples of "phosphorus oxoacid" include phosphoric acid (also referred to as "ortho-phosphoric acid"), phosphoric acid condensate, i.e., condensed phosphoric acid, phosphorous acid, phosphonic acid, hypophosphorous acid (also referred to as "phosphinic acid"), and polyphosphoric acid (also referred to as "metaphosphoric acid").

Examples of salts of phosphorus oxoacid include alkali metal salts (sodium salt, potassium salt, or the like), alkaline-earth metal salts (calcium salt or the like), aluminum salt, zinc salt, or ammonium salt of phosphorus oxoacid, as well as combinations thereof.

Examples of salts of phosphorus oxoacid include phosphates such as sodium phosphate, potassium phosphate, disodium phosphate, potassium dihydrogen phosphate, sodium dihydrogen phosphate and calcium dihydrogen phosphate; pyrophosphates such as potassium pyrophosphate, sodium pyrophosphate and disodium dihydrogenpyrophosphate; polyphosphates such as tripolyphosphate and tetrapolyphosphate; linear condensed phosphates; cyclic condensed phosphates such as metaphosphate and hexametaphosphate; phosphites such as potassium phosphite, sodium phosphite, calcium phosphite and aluminum phosphite; hypophosphites such as potassium hypophosphite, sodium hypophosphite and calcium hypophosphite; and polyphosphates such as potassium polyphosphate, sodium polyphosphate and calcium polyphosphate.

Among these examples of salts of phosphorus oxoacid, phosphites are preferable in terms of the small particle diameter and easy dispersion in the elastomer, as well as the high degree of shape-maintaining properties after the expansion.

The amount of the salt of phosphorus oxoacid in the fireproof elastomer composition is not particularly limited. The amount of the salt of phosphorus oxoacid is preferably 3 to 300 parts by mass, more preferably 50 to 200 parts by mass, per 100 parts by mass of the elastomer. When the content of the salt of phosphorus oxoacid in the fireproof elastomer composition is 3 parts by mass or more, a stable shape of the residue after the combustion of the fireproof elastomer composition can be ensured. When the content of the salt of phosphorus oxoacid is 300 parts by mass or less, the moldability and the tensile elongation of the fireproof elastomer composition will not easily deteriorate.

The reinforcing inorganic filler is used for the fireproof elastomer composition so as to increase the tensile strength and the tensile elongation.

Examples of reinforcing inorganic fillers include one or more members selected from carbon black, white carbon (wet synthetic silica), hard clay, calcium carbonate, talc, mica, alumina, titanium oxide, calcium oxide, magnesium oxide, and graphite.

Carbon black is preferable because it has high affinity for rubber, a small particle diameter, and a well-developed structure. The particle diameter may be measured using a laser diffraction particle size analyzer.

The upper limit of the average particle size of the reinforcing inorganic filler is not particularly limited. However, the average particle size is preferably 30 µm or less. When the average particle size is 30 µm or less, the desired tensile strength and the desired expansion rate of the fireproof elastomer composition may be easily ensured.

The lower limit of the average particle size of the reinforcing inorganic filler is not particularly limited. For example, for reinforcing inorganic fillers other than carbon black, the lower limit of the average particle size is preferably 1 µm or more. When the average particle size is 1 µm or more, it does not easily undergo aggregation even without special processing such as a surface treatment; thus, it may easily form a compound with rubber or an elastomer. For example, for reinforcing inorganic fillers made of carbon black, the lower limit of the average particle size is preferably 1 nm or more.

The amount of the reinforcing inorganic filler in the fireproof elastomer composition is not particularly limited. The amount of the reinforcing inorganic filler is preferably 1 to 300 parts by mass, more preferably 1 to 100 parts by mass, per 100 parts by mass of the elastomer. In another embodiment, the fireproof elastomer composition contains a reinforcing inorganic filler in an amount of more than 10 parts by mass and not more than 300 parts by mass. When the content of the reinforcing inorganic filler in the fireproof elastomer composition is 1 part by mass or more, the general characteristics described above can be imparted. When the content of the reinforcing inorganic filler is 300 parts by mass or less, it is preferable because the flexibility of the fireproof elastomer composition is maintained.

In particular, the fireproof elastomer composition contains 3 to 300 parts by mass of a thermally expandable graphite, 3 to 300 parts by mass of salt of phosphorus oxoacid, and 1 to 300 parts by mass of a reinforcing inorganic filler, per 100 parts by mass of the elastomer. In another embodiment, the fireproof elastomer composition contains 3 to 300 parts by mass of a thermally expandable graphite, 3 to 300 parts by mass of salt of phosphorus oxoacid, and more than 10 parts by mass, and not more than 300 parts by mass, of a reinforcing inorganic filler, per 100 parts by mass of the elastomer. In still another embodiment, the fireproof elastomer composition contains 50 to 200 parts by mass of a thermally expandable graphite, 50 to 200 parts by mass of salt of phosphorus oxoacid, and more than 10 parts by mass and not more than 100 parts by mass of a reinforcing inorganic filler, per 100 parts by mass of the elastomer.

With this composition, the desired tensile strength and expansion rate can easily be ensured. Further, it is possible to obtain a fireproof elastomer composition having a high tensile elongation. Furthermore, it is possible to obtain a fireproof elastomer composition ensuring a high degree of residue hardness after the combustion.

The fireproof elastomer composition of the present invention may be crosslinked or not crosslinked. As used herein, "a crosslinked fireproof elastomer composition" means a fireproof elastomer composition in a crosslinked state as a result of partial or entire vulcanization of the elastomer, in particular, the synthetic rubber in the fireproof elastomer composition.

By crosslinking a fireproof elastomer composition, the properties, including strength, compressive permanent set, and the like, improve. On the other hand, an uncrosslinked fireproof elastomer composition is advantageous in terms of large elongation, lower costs, easy processability, and the like.

In the fireproof elastomer composition of the present invention, the quotient produced by the division of the total amount of the reinforcing inorganic filler and the thermally expandable graphite by the amount of the salt of phosphorus oxoacid is 0.7 to 10. When the quotient is less than 0.7, the expansion rate decreases. When the quotient is more than 10, the residue hardness decreases. In both cases, the fireproof performance decreases. The quotient is preferably in a range of 0.7 to 4.0, and more preferably in a range of 0.8 to 2.0.

Further, for the fireproof elastomer composition of the present invention, the tensile strength at 23°C is 1.0 N/mm² or more, and the expansion rate after the combustion is 15 times or more. The tensile strength may be measured according to JIS K6251. When the tensile strength is 1 N/mm² or more, the strength as a rubber composition is high, and the strength required for a rubber product (such as a construction gasket) may be sufficiently satisfied. The tensile strength is preferably 2 N/mm² or more, more preferably 2.3 N/mm² or more, further more preferably 2.5 N/mm² or more.

In the present specification, the expansion rate is calculated from the average thickness of the lowest score and the highest score of the expanded residue when the sample of the thermally expandable fireproof material has been heated for 30 minutes at 600°C by dividing it by the unloaded thickness before the combustion. An expansion rate after the combustion of 15 times or more is sufficient for the fireproof elastomer composition to compensate the loss of the elastomer component, and enables the fireproof elastomer composition to form a heat insulating layer. The expansion rate is preferably 20 times or more, more preferably 30 times or more. Since a higher expansion rate is preferable, the upper limit of the expansion rate is not particularly limited, and is preferably not more than 100 times, and more preferably not more than 50 times.

The fireproof elastomer composition of the present invention satisfies the above ranges of tensile strength and expansion rate; in addition, its residue hardness is 0.11 kgf/cm² or more.

When the residue hardness is 0.11 kgf/cm² or more, the fireproof elastomer composition or a molded article formed from the composition maintains sufficient mechanical strength even after the combustion, thereby preventing it from falling from the construction, thus ensuring sufficient fireproof performance as a fireproof material.

Further, the fireproof elastomer composition of the present invention satisfies the above ranges of tensile strength and expansion rate, or satisfies the above ranges of tensile strength, expansion rate, and residue hardness; preferably, in addition, its tensile elongation at 23°C is 200% or more. The tensile elongation may be measured according to JIS K6251. Further, when the tensile elongation at 23°C is 200% or more, it is possible to impart even more superior tensile elongation to a rubber product of the fireproof elastomer composition. The upper limit of the tensile elongation at 23°C is not particularly limited, and is preferably 400% or less. The upper limit of the tensile elongation at 23°C is preferably 200% or more and 400% or less when the elastomer is EPDM or TPO.

The fireproof elastomer composition of the present invention may contain an inorganic filler, crosslinking agent and crosslinking promoter.

When the expandable heat insulating layer is formed, the inorganic filler contained therein increases the heat capacity and suppresses the heat transfer, and also functions as an aggregate, thereby improving the strength of the expandable heat insulating layer. In this specification, the reinforcing inorganic filler described above is not included in the range of inorganic fillers. The inorganic fillers are not particularly limited and examples include metal oxides such as zinc oxide, iron oxide, tin oxide, antimony oxide or ferrite; metal hydroxides such as calcium hydroxide, magnesium hydroxide, aluminum hydroxide, or hydrotalcite; metal carboxylates such as basic magnesium carbonate, magnesium carbonate, zinc carbonate, strontium carbonate, or barium carbonate; inorganic phosphates as a flame retardant; calcium salts such as calcium sulfate, gypsum fiber, and calcium silicate, as well as diatomaceous earth, dawsonite, barium sulfate, montmorillonite, bentonite, activated clay, sepiolite, imogolite, sericite, glass fiber, glass bead, silica balloon, aluminum nitride, boron nitride, silicon nitride, carbon fiber, carbon balloon, charcoal powder, various types of metal powder, potassium titanate, magnesium sulfate, lead zirconium titanate, zinc stearate, calcium stearate, aluminum borate, molybdenum sulfide, silicon carbide, stainless steel fiber, zinc borate, various types of magnetic powder, slag fiber, fly ash, and dehydrated sludge. One kind of inorganic fillers, or two or more kinds of inorganic fillers may be used. The amount of the inorganic filler is 0 to 50 parts by mass, preferably 0 to 20 parts by mass, more preferably not more than 10 parts by mass, per 100 parts by mass of the elastomer.

The crosslinking agent and the crosslinking promoter are incorporated in the fireproof elastomer composition to impart a crosslinking property to the composition.

The crosslinking agent is not particularly limited insofar as it is capable of crosslinking rubbers. Examples thereof include sulfur-based compounds such as sulfur or polysulfide; oxime-based compounds such as p-quinone dioxime or p,p'-dibenzoyl quinoneoxime; organic peroxide-based compounds such as t-butyl hydroperoxide, acetylacetone peroxide or cumene hydroperoxide. The crosslinking agent is preferably a sulfur-based compound. One kind of crosslinking agent, or two or more kinds of crosslinking agents may be used. The amount of the crosslinking agent is not particularly limited. For example, 0.1 to 10 parts by mass of a crosslinking agent may be used per 100 parts by mass of the elastomer.

The crosslinking promoter is used to promote the crosslinking of the crosslinked rubber and is not particularly limited. Examples thereof include thiuram-based compounds such as tetramethylthiuram disulfide, tetrabutylthiuram disulfide, tetramethylthiuram monosulfide and dipentamethylenethiuram tetrasulfide; thiazole-based compounds such as 2-mercaptobenzothiazole and dibenzothiazole disulfide; dithiocarbamate-based compounds such as zinc dimethyldithiocarbamate, zinc diethyldithiocarbamate, and zinc di-n-butyldithiocarbamate; aldehyde amine-based compounds such as n-butyl aldehyde aniline; sulfenamide-based compounds such as N-cyclohexyl-2-benzothiazyl sulfenamide; guanidine-based compounds such as diorthotolylguanidine and diorthonitrile guanidine; thiourea-based compounds such as thiocarbanilide, diethylthiourea, and trimethylthiourea; and zinc oxides. One kind of crosslinking promoter, or two or more kinds of crosslinking promoters may be used. The amount of the crosslinking promoter is not particularly limited. For example, 0.1 to 10 parts by mass of a crosslinking promoter may be used per 100 parts by mass of the elastomer.

The fireproof elastomer composition of the present invention may contain a softener, plasticizer, anti-aging agent, antistatic agent, stabilizer, processing aid, lubricant, pigment, tackifier resin, molding assisting agent, tackifier, and the like, insofar as the effects thereof are not impaired. Examples of softeners and plasticizers effective to adjust the workability include paraffin-based and naphthene-based process oils, liquid and other paraffins, waxes, phthalic acid-based agents, adipic acid-based agents, ester-based plasticizers such as sebacic acid-based or phosphoric acid-based plasticizers, stearic acid, and esters thereof.

The fireproof elastomer composition of the present invention may be obtained by melt-mixing the elastomer, thermally expandable graphite, salt of phosphorus oxoacid, and reinforcing inorganic filler, as well as, as necessary, inorganic filler, plasticizer or softener, crosslinking agent, crosslinking promoter, and other additives using a known kneading device.

Examples of kneading device include an extruder, kneader mixer, twin roll, Banbury mixer, and the like.

The fireproof elastomer composition may be formed by, for example, casting the obtained fireproof elastomer composition into a die. The molded article obtained by molding the fireproof elastomer composition of the present invention may be composed of the fireproof elastomer composition either partially or entirely. One embodiment of the present invention provides a molded article, in particular, an extruded molded article having a mold portion comprising the fireproof elastomer composition.

The molded article obtained by molding the fireproof elastomer composition of the present invention may be used for an opening of a building material for use in a construction. In this specification, the definition of "construction" includes, but is not limited to, building materials for single-family houses, apartments, high-rise residential buildings, high-rise buildings, commercial facilities, public facilities, and the like; and structures such as vessels, including passenger ships, transport vessels, ferries, and the like, and vehicles. In this specification, examples of the "building material" include, but are not limited to, arbitrary materials used to build a construction, such as structures including walls, floors, bricks, roofs, and boards; and fittings such as windows (including sliding windows, opening windows, and raising and lowering windows), *shoji* (paper sliding doors), doors, *fusuma* (Japanese sliding screens), and *ramma* (transoms); wiring; and pipes. In this specification, "an opening" of a building material refers to not only an opening of a single building material but also a space sectioned between two or more building materials, as well as a gap between two oppositely facing building materials.

The molded articles may be used for, for example, construction gaskets. Referring to Fig. 1, the construction gasket 1 as a molded article comprises a main body 2 constituted of the fireproof elastomer composition of the present invention; projections 3, each of which is constituted of a thermoplastic resin composition and is connected to the top end of the main body 2; a connecting base 4 having a T-shaped cross section, which may be constituted of the same or a different material as that of the main body 2 or the projection 3, and is connected to the base end of the main body 2. The main body 2, the projections 3, and the connecting base 4 are formed integrally by extrusion molding. By engaging the base end of the connecting base 4 with the internal space of a fixed frame body of a fitting, such as a door or a window, and positioning the projection 3 so that the projection 3 comes in contact with a movable main body of the fitting, such as a door body, a window glass, or the like, attached to the fixed frame body, it is possible to impart airtightness and fireproof properties to the fitting.

The present invention may also have the following structures.
Item 1. A fireproof elastomer composition, comprising an elastomer, a thermally expandable graphite, a salt of phosphorus oxoacid, and a reinforcing inorganic filler; wherein:
   the quotient produced by the division of the total amount of the reinforcing inorganic filler and the thermally expandable graphite by the amount of the salt of phosphorus oxoacid is 0.7 to 10; and
   the tensile strength at 23°C is 1 N/mm² or more, and the expansion rate after combustion is 15 times or more.
Item 2. The fireproof elastomer composition according to Item 1, wherein the reinforcing inorganic filler has an average particle size of 30 µm or less.
Item 3. The fireproof elastomer composition according to Item 1 or 2, wherein the residue hardness is 0.11 kgf/cm² or more.
Item 4. The fireproof elastomer composition according to any one of Items 1 to 3, wherein the tensile elongation at 23°C is 200% or more.
Item 5. The fireproof elastomer composition according to any one of Items 1 to 4, wherein the salt of phosphorus oxoacid is a phosphate, a phosphonate, a hypophosphite, a polyphosphate or a combination thereof.
Item 6. The fireproof elastomer composition according to any one of Items 1 to 4, wherein the salt of phosphorus oxoacid is a phosphite or a phosphate.
Item 7. The fireproof elastomer composition according to any one of Items 1 to 5, wherein the salt of phosphorus oxoacid is at least one member selected from potassium phosphate, sodium phosphate, calcium phosphate, potassium pyrophosphate, sodium pyrophosphate, disodium dihydrogenpyrophosphate, potassium phosphite, sodium phosphite, calcium phosphite, calcium dihydrogen phosphate, potassium dihydrogen phosphate, polyphosphate, and aluminum phosphite.
Item 8. The fireproof elastomer composition according to any one of Items 1 to 7, wherein the elastomer is an ethylene-propylene-diene rubber and/or an olefin-based elastomer.
Item 9. The fireproof elastomer composition according to any one of Items 1 to 8, wherein the reinforcing inorganic filler is one, two, or more members selected from carbon black, white carbon (wet synthetic silica), hard clay, calcium carbonate, talc, mica, alumina, titanium oxide, calcium oxide, magnesium oxide, and graphite.
Item 10. The fireproof elastomer composition according to any one of Items 1 to 9, wherein the fireproof elastomer composition comprises 3 to 300 parts by mass of the thermally expandable graphite, 3 to 300 parts by mass of the salt of phosphorus oxoacid, and 1 to 300 parts by mass of the reinforcing inorganic filler, per 100 parts by mass of the elastomer.
Item 11. A molded article having a mold portion comprising the fireproof elastomer composition according to any one of Items 1 to 10.
Item 12. The molded article according to Item 11 for use in a construction gasket.

The present invention is more specifically explained below in reference to Examples. The present invention is, however, not limited to these examples etc.

### Examples

### Test Example 1

### 1. Method for Producing Fireproof Material

Molded articles were produced from the fireproof elastomer compositions of Examples 1 to 5 and Comparative Examples 1 and 2 according to the formulations shown in Table 1. The amounts of the components in the table are shown in terms of parts by mass. Each resin composition was kneaded for 10 minutes at 150°C using a kneader and was formed into a sheet having a thickness of 1 mm using a calender roll.

As materials of Examples 1 to 5, and Comparative Examples 1 and 2, EPDM (EP35, JSR Corporation), carbon black (#55G, Asahi Carbon Co., Ltd., average particle size = 66 nm (electron microscope method)), thermally expandable graphite (GREP-EG, Tosoh corporation), aluminum phosphite (APA-100, Taihei Chemical Industrial Co., Ltd.), process oil (PW90, Idemitsu Kosan Co., Ltd.), stearic acid (Sakura, NOF Corporation), and sulfur were used. Dibenzothiazyl disulfide (Sanceler DM-G, Sanshin Chemical Industry Co., Ltd.) was used as a crosslinking promoter.

### 2. Measurement of Various Characteristics

Next, various characteristics of the molded articles produced from the fireproof elastomer compositions of Examples 1 to 5 and Comparative Examples 1 and 2 were measured as follows.

### (1) JIS tensile strength (MPa) and tensile elongation (%)

Specimens (JIS No. 3 dumbbell) were cut off from the molded articles obtained in Examples 1 to 5 and Comparative Examples 1 and 2 in Section 1 above, and the tensile strength and the tensile elongation of the specimens were measured according to JIS K6251. The tensile strength and the tensile elongation of the specimens were measured at 23°C with a distance between the chucks of 60 mm, a gauge length of 20 mm, a tensile rate of 500 mm/min (strong). The tensile elongation was calculated according to the proportion of the elongation (displacement) upon fracture with respect to the gauge distance.

### (2) Expansion Rate

Specimens having a length of 100 mm, a width of 100 mm, and a thickness of 2.0 mm were obtained from the molded articles produced in Examples 1 to 5 and Comparative Examples 1 and 2 in Section 1 above, and supplied to an electric furnace to be heated at 600°C for 30 minutes. Thereafter, the thicknesses of the expanded residue of each specimen at the lowest point and the highest point were measured, and the average thickness of the specimen after heating divided by the thickness of the specimen before heating was calculated as the expansion rate.

### (3) Residue Hardness

The heated specimens that had their expansion rates measured in (2) above were supplied to a tensile tester (Tensilon RTC, Orientec Corporation). The stress at the fracture point was measured by compressing each specimen using an indenter (0.25 cm²) in a compression mode at a rate of 0.1 cm/sec.

### (4) Comprehensive Evaluation

- Tensile strength: 1.0 N/mm² or more
- Tensile elongation: 200% or more
- Expansion rate after the combustion: 15 times or more
- Residue hardness: 0.11 kgf/cm² or more

The comprehensive evaluations of the specimens obtained from the molded articles of Examples 1 to 5 and Comparative Examples 1 and 2 were performed, and those satisfying both the tensile strength and the expansion rate were evaluated as "PASS," and those not satisfying the tensile strength or the expansion rate were evaluated as "FAIL."

The specimens of Examples 1 to 5 satisfied all of the above four conditions.

In the molded article of Comparative Example 1, the quotient produced by the division of the total amount of the reinforcing inorganic filler (carbon black) and the thermally expandable graphite by the amount of the salt of phosphorus oxoacid was greater than 10, and the expansion rate was low.

In the molded article of Comparative Example 2, the quotient produced by the division of the total amount of the reinforcing inorganic filler and the thermally expandable graphite by the amount of the salt of phosphorus oxoacid was smaller than 0.7, and the expansion rate was low.

In comparison with the molded articles of Examples 1 to 5 that satisfied all of the four conditions, the molded articles of Comparative Examples 1 and 2 did not satisfy both the tensile strength and the expansion rate.

**Table 1**

| | Material name | | | Example 1 | Example 2 | Example 3 | Example 4 | Example 5 | Comparative Example 1 | Comparative Example 2 |
|---|---|---|---|---|---|---|---|---|---|---|
| Content | EPDM | | | 100 | 100 | 100 | 100 | 100 | 100 | 100 |
| | Carbon black | | | 10 | 50 | 30 | 10 | 10 | 50 | 30 |
| | Thermally expandable graphite | | | 90 | 110 | 80 | 90 | 90 | 30 | 10 |
| | Aluminum phosphite | | | 70 | 100 | 70 | 120 | 50 | 5 | 70 |
| | Process oil | | phr | 15 | 15 | 15 | 15 | 15 | 15 | 15 |
| | Stearic acid | | | 1 | 1 | 1 | 1 | 1 | 1 | 1 |
| | Zinc oxide | | | 5 | 5 | 5 | 5 | 5 | 5 | 5 |
| | Sulfur | | | 1.5 | 1.5 | 1.5 | 1.5 | 1.5 | 1.5 | 1.5 |
| | Crosslinking promoter | | | 2 | 2 | 2 | 2 | 2 | 2 | 2 |
| (Carbon black + thermally expandable graphite)/Aluminum phosphite | | | - | 1.4 | 1.6 | 1.6 | 0.8 | 2.0 | 16 | 0.6 |
| General performance | | Tensile strength | N/mm2 | 2.0 | 3.2 | 4.6 | 1.5 | 2.7 | 3.0 | 3.3 |
| | | Tensile elongation | % | 200 | 300 | 320 | 110 | 290 | 530 | 320 |
| Fireproof performance | | Expansion rate | Times | 22 | 24 | 20 | 16 | 24 | 13 | 7 |
| | | Residue hardness | kgf/cm² | 0.29 | 0.18 | 0.39 | 0.51 | 0.12 | 0.35 | 0.56 |
| Comprehensive evaluation | | | | PASS | PASS | PASS | PASS | PASS | FAIL | FAIL |

### Test Example 2

Molded articles were produced from the fireproof elastomer compositions of Examples 6 to 8 according to the formulations shown in Table 2. The amounts of the components in the table are shown in terms of parts by mass. The production of the molded articles and the measurements of the various characteristics of the molded articles were performed as in Test Example 1.

As the materials of Examples 6 to 8, olefin-based thermoplastic elastomer (Esupo Rex 822, Sumitomo Chemical Co., Ltd.) and carbon black (#55G, Asahi Carbon Co., Ltd.) were used. The other reagents were the same as those in Test Example 1. Among the items in the comprehensive evaluation in Test Example 1, the molded articles of Examples 6 to 8 satisfied the conditions of the tensile strength, the expansion rate after the combustion, and the residue hardness.

**Table 2**

| | Material name | | Example 6 | Example 7 | Example 8 |
|---|---|---|---|---|---|
| Content | Thermoplastic elastomer | phr | 100 | 100 | 100 |
| | Carbon black | | 15.5 | 5 | 15.5 |
| | Thermally expandable graphite | | 70 | 70 | 70 |
| | Aluminum phosphite | | 60 | 60 | 86 |
| (Carbon black + thermally expandable graphite)/Aluminum phosphite | | - | 1.43 | 1.25 | 1.00 |
| General performance | Tensile strength | N/mm2 | 7.6 | 6.5 | 7.9 |
| | Tensile elongation | % | 10 | 15 | 7 |
| Fireproof performance | Expansion rate | Times | 24 | 25 | 22 |
| | Residue hardness | kgf/cm² | 0.16 | 0.19 | 0.23 |
| Comprehensive evaluation | | | PASS | PASS | PASS |

### Test Example 3

In this test example, fireproof elastomer compositions containing various reinforcing inorganic fillers were examined.

Molded articles were produced from the fireproof elastomer compositions of Examples 9 to 12 according to the formulations shown in Table 3. The amounts of the components in the table are shown in terms of parts by mass. The production of the molded articles and the measurements of the various characteristics of the molded articles were performed as in Test Example 1. White carbon (Nipsil VN3, Tosoh Silica Corporation, average particle size = 20 µm) was used as the reinforcing inorganic filler 1 in Example 7, hard clay (ST309, Shiraishi Calcium Kaisha, Ltd., average particle size = 0.7 µm) was used as the reinforcing inorganic filler 2 in Example 8, and calcium carbonate (average particle size = 0.15 µm) was used as the reinforcing inorganic filler 3 in Example 9, and talc (average particle size = 5.0 µm) was used as the reinforcing inorganic filler 4 in Example 10.

The molded articles of Examples 9 to 12 satisfied the conditions of all of the four items in the comprehensive evaluation in Test Example 1.

**Table 3**

| | Material name | | Example 9 | Example 10 | Example 11 | Example 12 |
|---|---|---|---|---|---|---|
| Content | EPDM | | 100 | 100 | 100 | 100 |
| | Thermally expandable graphite | | 130 | 130 | 130 | 130 |
| | Aluminum phosphite | | 110 | 110 | 110 | 110 |
| | Process oil | | 50 | 50 | 50 | 50 |
| | Reinforcing inorganic filler 1 | | 30 | | | |
| | Reinforcing inorganic filler 2 | | | 30 | | |
| | Reinforcing inorganic filler 3 | phr | | | 30 | |
| | Reinforcing inorganic filler 4 | | | | | 30 |
| | Stearic acid | | 1.5 | 1.5 | 1.5 | 1.5 |
| | Zinc oxide | | 7 | 7 | 7 | 7 |
| | Sulfur | | 1.5 | 1.5 | 1.5 | 1.5 |
| | Crosslinking promoter | | 3 | 3 | 3 | 3 |
| (Reinforcing Inorganic filler + thermally expandable graphite)/Aluminum phosphite | | - | 1.45 | 1.45 | 1.45 | 1.45 |
| General performance | Tensile strength | N/mm2 | 1.8 | 1.7 | 1.5 | 1.7 |
| | Tensile elongation | % | 408 | 363 | 390 | 415 |
| Fireproof performance | Expansion rate | Times | 24 | 20 | 21 | 24 |
| | Residue hardness | kgf/cm² | 0.15 | 0.12 | 0.16 | 0.29 |
| Comprehensive evaluation | | | PASS | PASS | PASS | PASS |

### Test Example 4

In this test example, fireproof elastomer compositions containing various salts of phosphorus oxoacid were examined.

Molded articles were produced from the fireproof elastomer compositions of Examples 13 and 14 according to the formulations shown in Table 4. The amounts of the components in the table are shown in terms of parts by mass. The production of the molded articles and the measurements of the various characteristics of the molded articles were performed as in Test Example 1. Calcium dihydrogen phosphate (Wako Pure Chemical Industries, Ltd.) was used as the salt of phosphorus oxoacid in Example 13 and potassium dihydrogen phosphate (Wako Pure Chemical Industries, Ltd.) was used as the salt of phosphorus oxoacid in Example 14.

The molded articles of Examples 13 and 14 satisfied the conditions of all of the four items in the comprehensive evaluation in Test Example 1.

**Table 4**

| | Material name | | | Example 13 | Example 14 |
|---|---|---|---|---|---|
| Content | EPDM | | phr | 100 | 100 |
| | Carbon black | | | 10 | 10 |
| | Thermally expandable graphite | | | 90 | 90 |
| | Calcium dihydrogen phosphate | | | 100 | |
| | Potassium dihydrogen phosphate | | | | 100 |
| | Process oil | | | 15 | 15 |
| | Stearic acid | | | 1 | 1 |
| | Zinc oxide | | | 5 | 5 |
| | Sulfur | | | 1.5 | 1.5 |
| | Crosslinking promoter | | | 2 | 2 |
| (Carbon black + thermally expandable graphite)/Aluminum phosphite | | | - | 1.0 | 1.0 |
| General performance | | Tensile strength | N/mm2 | 1.1 | 1.0 |
| | | Tensile elongation | % | 280 | 250 |
| Fireproof performance | | Expansion rate | Times | 22 | 21 |
| | | Residue hardness | kgf/cm² | 0.12 | 0.11 |
| Comprehensive evaluation | | | | PASS | PASS |

### Reference Numerals

1: Construction gasket
2: Main body
3: Projection
4: Continuous base

## Claims

1. A fireproof elastomer composition, comprising an elastomer, a thermally expandable graphite, a salt of phosphorus oxoacid, and a reinforcing inorganic filler;
wherein:
the quotient produced by the division of the total amount of the reinforcing inorganic filler and the thermally expandable graphite by the amount of the salt of phosphorus oxoacid is 0.7 to 10; and
the composition has the tensile strength at 23°C of 1 N/mm² or more, and the expansion rate after combustion of 15 times or more.

2. The fireproof elastomer composition according to claim 1, wherein the reinforcing inorganic filler has an average particle size of 30 µm or less.

3. The fireproof elastomer composition according to claim 1 or 2, wherein the composition has the residue hardness of 0.11 kgf/cm² or more.

4. The fireproof elastomer composition according to any one of claims 1 to 3, wherein the tensile elongation at 23°C is 200% or more.

5. The fireproof elastomer composition according to any one of claims 1 to 4, wherein the salt of phosphorus oxoacid is a phosphite or a phosphate.

6. The fireproof elastomer composition according to any one of claims 1 to 5, wherein the elastomer is an ethylene-propylene-diene rubber and/or an olefin-based elastomer.

7. The fireproof elastomer composition according to any one of claims 1 to 6, wherein the fireproof elastomer composition comprises 3 to 300 parts by mass of the thermally expandable graphite, 3 to 300 parts by mass of the salt of phosphorus oxoacid, and 1 to 300 parts by mass of the reinforcing inorganic filler, per 100 parts by mass of the elastomer.

8. A molded article having a mold portion comprising the fireproof elastomer composition according to any one of claims 1 to 7.

9. The molded article according to claim 8 for use in a construction gasket.
